# EUROPEAN PATENT APPLICATION

(11) **EP 1 152 450 A1**
(43) Date of publication of application: **07.11.2001**
(21) Application number: 00901900.1
(22) Date of filing: 26.01.2000
(51) Int. Cl.: H01J 29/86, H01J 9/26, C03C 3/102, C03C 3/105, C03C 3/07

(54) **CATHODE-RAY TUBE AND ITS PRODUCTION METHOD**

(30) Priority: 01.02.1999 JP 2388999; 22.04.1999 JP 11482399; 07.05.1999 JP 12760799; 11.05.1999 JP 12946899; 13.05.1999 JP 13268499; 18.08.1999 JP 23105999
(71) Applicant: NIPPON ELECTRIC GLASS COMPANY, Limited, Otsu-shi, Shiga 520-8639 (JP)
(72) Inventor: YAMAZAKI, Hiroki, Nippon Electric Glass Co., Ltd., Otsu-shi, Shiga 520-8639 (JP); KOMORI, Hiroshi, Nippon Electric Glass Co., Ltd., Otsu-shi, Shiga 520-8639 (JP); MIWA, Yoshiharu, Nippon Electric Glass Co., Ltd., Otsu-shi, Shiga 520-8639 (JP)
(74) Representative: Tetzner, Michael, Dipl.-Ing.
(86) International application number: JP0000378
(87) International publication number: WO0046835

(57) **Abstract**

The present invention is a cathode ray tube in which a panel (10), a neck (11), a funnel (12), a stem (13), and an air-evacuating pipe (14) for forming an envelope are made as glass parts. At least one of the glass parts including the neck, the funnel, the stem, and the air-evacuating pipe is made of an infrared absorbing glass with an infrared transmittance of 70% or less for the wavelength of 1050nm in a thickness direction. Another is a method of producing a cathode ray tube in which fusing and sealing are carried out by heating and softening the glass parts including the panel, the funnel, the neck, the stem, and the air-evacuating pipe. Among the funnel, the neck, the stem, and the air-evacuating pipe of the cathode ray tube, at least one of the glass parts which is made of an infrared absorbing glass is heated and softened mainly by the use of infrared rays. Such glass part tends to absorb heat radiation. Therefore, the heating time can be shortened and the heating temperature can be lowered upon fusing and sealing the glass part. Moreover, only a predetermined portion of the glass part can be heated in a spot-like fashion by the use of heating means such as an infrared lamp or a laser.

## Description

### Technical Field

This invention relates to a cathode ray tube suitable for a color cathode ray tube using an electron gun with an impregnated-type cathode and to a method of producing the same. Specifically, the invention relates to a cathode ray tube capable of preventing, without the use of an air-cooling apparatus, degradation in emission characteristic of the electron gun and pollution of a heating portion at the time when glass parts are fused or sealed to form an envelope, and relates to a method of producing the same.

### Background Technique

Conventionally, an envelope of a cathode ray tube comprises a display panel for projecting video images, a tubular neck provided with an electron gun therein, a flare-shaped funnel connecting the display panel and the tubular neck, a stem fused to an open end of the tubular neck, and an air-evacuating pipe fused to an outer surface of the stem.

Generally, the display panel, the tubular neck, the funnel, the stem, and the air-evacuating pipe, which form the envelope of the cathode ray tube, are parts made of glass. Typically, these glass parts are sealed to each other by fusing. Fusing is also performed for other elements such as an anode button, a lead wire, and the open end.

As a sealing method by fusing, use has been made of a method of heating and softening a predetermined portion of each glass part by the use of heating means such as a gas-oxygen burner or a gas-air burner, or another method of heating and softening a predetermined portion of each glass part by supplying an electric current to a resistor wire such as nichrom or kanthal.

In the cathode ray tube of the type, electron beams emitted from the electron gun excite emission of phosphors arranged on an inner surface of the display panel so as to project the video image on the display panel. However, at this time, X-rays bremsstrahlung are generated inside of the cathode ray tube. If the X rays leak out of the tube through the envelope wall, an adverse influence is given to the human body. Therefore, each of the glass parts forming the envelope is made of a glass having a high X-ray absorbability.

In particular, the tubular neck is required to have a high X-ray absorbability because the tubular wall thereof usually has an average thickness equal to about 2.4 mm and is thinner than that of the display panel or the funnel. Therefore, the tubular neck is typically made of glass containing about 35 weight% of PbO which is a component for most improving the X-ray absorbability, the glass thus having an absorption coefficient of 80cm⁻¹ or more for the X ray with a wavelength of 0.6 angstrom.

The funnel is made of a glass containing about 10-30 weight% of PbO and having an absorption coefficient of 40cm⁻¹ or more for the X ray having a wavelength of 0.6 angstrom.

The stem is required to be high in electric resistance and excellent in hot workability because it is sealed with metal. The air-evacuating pipe is required to be excellent in hot workability because it is sealed after the cathode ray tube is reduced in pressure and evacuated while being baked. In view of the above, each of the stem and the air-evacuating pipe is made of lead-rich glass which is excellent in X-ray absorbability, electric insulation, and hot workability.

Conventionally, barium is used as a cathode material for the electron gun attached to the color cathode ray tube. However, in recent years, use is widely spreading of an electron gun with an impregnated-type cathode (hereinafter abbreviated to "impregnated cathode") using tungsten carbide as a cathode material because focusing is further improved and picture quality is graded up.

However, tungsten carbide is easily oxidized at a relatively low temperature as compared with barium. Therefore, if the electron gun with the impregnated cathode is exposed to the temperature equal to or higher than 600°C, the cathode material is oxidized. This results in a problem that emission characteristics will be degraded.

Therefore, when the electron gun with the impregnated cathode is equipped in the tubular neck and the stem is fused to the tubular neck, it is necessary in a conventional working process to cool down the cathode by supplying a nitrogen gas to the electron gun by the use of an air-cooling apparatus. It is also necessary to suppress the increase in temperature of the cathode of the electron gun by the use of the air-cooling apparatus when the. air-evacuating pipe is sealed after the cathode ray tube is reduced in pressure and evacuated. However, the air-cooling apparatus of the type is very expensive and is inferior in workability because it is difficult to control a supply direction and a supply amount of the nitrogen gas.

In case of heating by the use of a combustion burner, a problem arises that a heated portion tends to be polluted by metallic contaminants adhered thereto due to presence of impurities in the burning gas. Such adhesion of the metallic contaminants to the glass parts is not preferable because electric resistance of the glass will be reduced to cause dielectric breakdown and a resolution and an illuminance of the cathode ray tube may possibly be degraded.

In recent years, the cathode ray tube has been increased in size, so that a breakage, the dielectric breakdown, the degradation in resolution or illuminance tends to be caused due to tensile strain in the glass. Accordingly, there is an increasing demand for prevention of the pollution during fusing or sealing of the glass parts forming the envelope.

Therefore, the object of the present invention is to provide a cathode ray tube capable of preventing degradation in emission characteristics of an electron gun with an impregnated cathode and suppressing pollution at a heated portion, even if an air-cooling apparatus is not used, by shortening a heating time or lowering a heating temperature when glass parts for forming an envelope are fused and sealed to each other.

### Disclosure of the Invention:

The present invention relates to a cathode ray tube in which a panel, a funnel, a neck, a stem, and an air-evacuating pipe for forming an envelope are made as glass parts, wherein at least one of the glass parts including the funnel, the neck, the stem, and the air-evacuating pipe is made of an infrared absorbing glass and has an infrared transmittance of 70% or less in a thickness direction for the wavelength of 1050nm.

A method of producing a cathode ray tube according to the present invention includes fusing and sealing of glass parts including a panel, a funnel, a neck, a stem, and an air-evacuating pipe by heating and softening them, wherein at least one of the glass parts including the funnel, the neck, the stem, and the air-evacuating pipe is made of an infrared absorbing glass and the at least one glass part is heated and softened mainly by the use of infrared rays.

As described above, the glass part as a constituent readily absorbs heat because it is made of the infrared absorbing glass and has the infrared transmittance of 70% or less in the thickness direction for the wavelength of 1050nm. Therefore, the heating time can be shortened and the heating temperature can be lowered upon fusing and sealing the glass parts to each other. Moreover, only a predetermined portion of the glass part can be heated in a spot-like fashion by the use of heating means such as an infrared lamp or a laser.

In case where any one of the tubular neck, the stem, and the air-evacuating pipe is made of the above-mentioned infrared absorbing glass, heat conduction to the electron gun equipped in the tubular neck can be prevented at the time of fusing and sealing them. Even in case where an electron gun with an impregnated cathode is equipped, it is possible to suppress the oxidation of a cathode material without using the air-cooling apparatus. Such effect is especially remarkable for the fusing of the tubular neck and the stem because it is carried out in an area close to the electron gun. Moreover, it is preferable to form both the tubular neck and the stem by the infrared absorbing glass.

The level of pollution at a heated portion upon heating by the burner is increased as the heating time becomes longer and the heating temperature becomes higher. However, if the glass part is made of the infrared absorbing glass as mentioned above, the reduction in time and temperature can be achieved so as to suppress the pollution of the heated portion.

With the method of producing the cathode ray tube of the present invention, the main glass part is made of the infrared absorbing glass and this glass part is heated and softened mainly by the use of the infrared rays. Thus, the predetermined portion of the glass part can be heated in the spot-like fashion to be fused and sealed.

Specifically, by the conventional heating technique utilizing the combustion burner or an electric resistance, it is difficult to heat, in a spot-like fashion, the portion required to be heated. In other words, a surrounding portion which need not be heated is heated, or a fixing tool for the glass part and its atmosphere are also heated. Therefore, ineffective heat energy is additionally required. In addition, the heating rate or the cooling rate is limited. This often results in large tensile strain produced in the glass part to possibly cause breakage or damage.

On the other hand, in case where the glass part is heated and softened mainly by the use of the infrared rays as in the present invention, no direct increase in temperature is observed in an unirradiated portion which is not irradiated by the infrared rays. Furthermore, no direct increase in temperature is observed if the glass having a low infrared absorptivity is irradiated by the infrared rays.

In view of the above, the glass part is formed by a material having a high infrared absorptivity. The infrared rays irradiated from an infrared lamp such as a halogen lamp or a xenon lamp are converged or diverged by the use of a lens or a mirror to thereby irradiate only the required portion with appropriate density distribution. As a result, it is possible to heat and soften only the required portion in a short time. Moreover, the glass part is free from pollution caused in the heating utilizing the combustion with the burner.

Thus, in the method according to the present invention, the glass part forming the envelope is fused and sealed by irradiation of the infrared rays and heating in the spot-like fashion. Therefore, the method is applicable to the fusing of the display panel and the funnel, the fusing of the tubular neck and the funnel, the fusing of the tubular neck and the stem, the fusing of the stem and the air-evacuating pipe, the sealing of the air-evacuating pipe, and the fusing (sealing) of an anode button to the funnel. Accordingly, as compared with the conventional fusing and sealing method, the time required for the heating operation can be shortened and the heat energy can be saved. Even in case where the electron gun with the impregnated cathode is used, the oxidation of the cathode material can be prevented when the tubular neck and the stem are fused or when the air-evacuating pipe is sealed. Especially, since the fusing of the tubular neck and the stem is performed in the area close to the electron gun, the method according to the present invention which enables the heating in the spot-like fashion is most applicable to the fusing of the tubular neck and the stem.

### Brief Description of the Drawing

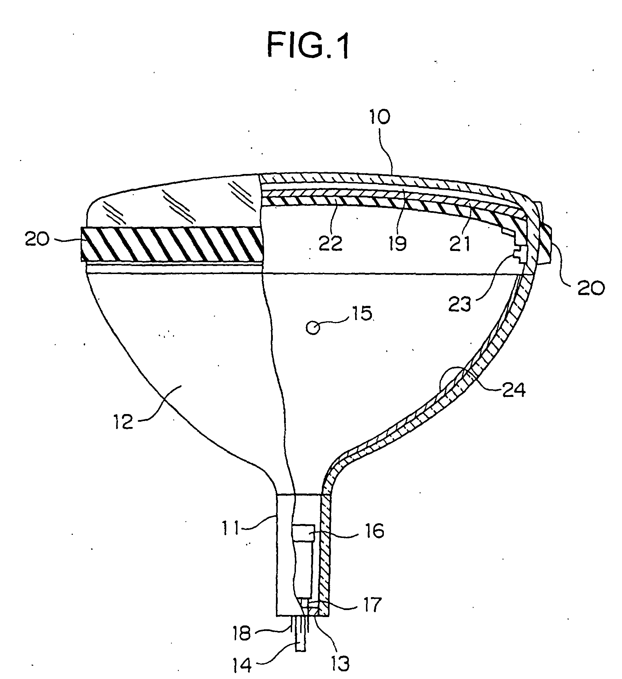

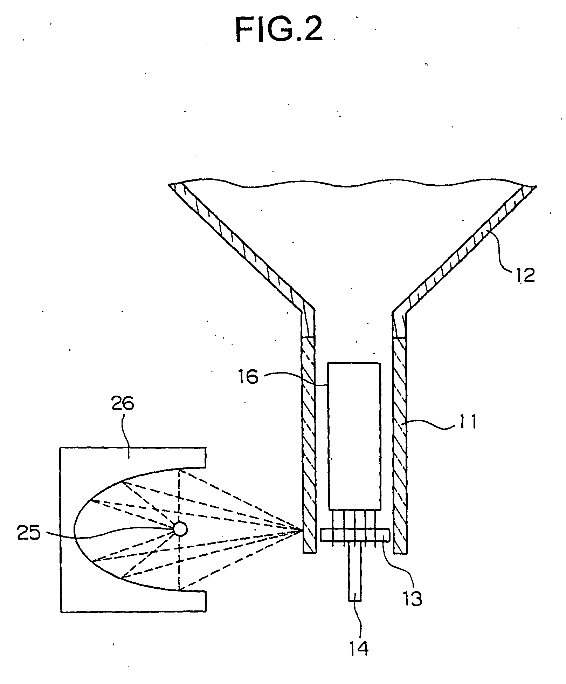

Fig. 1 is a view for describing a cathode ray tube and Fig. 2 is a view for describing a method of fusing a tubular neck and a stem by the use of infrared rays.

### Best Mode for Embodying the Invention

In order to describe the present invention more in detail, description will be given with reference to the accompanying drawing.

As shown in Fig. 1, an envelope of a cathode ray tube comprises a display panel 10 for projecting a video image, a tubular neck 11, a flare-shaped funnel 12 connecting the panel 10 and the neck 11, a stem 13 fused to an open end of the neck 11, and an air-evacuating pipe 14 fused to an outer surface of the stem 13.

Typically, the panel 10 and the funnel 12 are coupled by fusing or by frit seal while the funnel 12 and the neck 11 are coupled by fusing. Furthermore, an anode button 15 is fused (sealed) to a predetermined position of the funnel 12. An electron gun 16 is equipped in the neck 11. The electron gun 16 is connected to the stem 13 via inner leads 17. The stem 13 has an outer peripheral surface fused to the open end of the neck 11. One end of the airevacuating pipe 14 is fused to the outer surface of the stem 13. The inner leads 17 are connected to extracting leads 18 which are enclosed in the stem 13. The other end of the air-evacuating pipe 14 is sealed after the cathode ray tube is reduced in pressure and evacuated while being baked.

In the figure, illustration is made of a reinforcing band 20 for keeping the strength of the panel 10 and for preventing scattering upon breakage, an aluminum mask 21 for preventing returning of a fluorescent beam from a phosphor 19, a shadow mask 22 for defining an irradiating position of an electron beam, stud pins 23 for fixing the shadow mask 22, and a conductive film 24 for preventing the shadow mask 22 from high electrification or charging by the electron beam and for conduction and grounding to the outside.

Generally, the panel 10, the neck 11, the funnel 12, the stem 13, and the air-evacuating pipe 14 forming the envelope of the cathode ray tube are made as glass parts. In order to fuse and seal these glass parts, predetermined portions of the glass parts must be heated and softened.

In the cathode ray tube according to the present invention, the tubular neck 11, the funnel 12, the stem 13, and the air-evacuating pipe 14 as the glass parts forming the envelope are made of an infrared absorbing glass and have an infrared transmittance of 70% or less in a thickness direction for the wavelength of 1050nm. Accordingly, the cathode ray tube easily absorbs heat radiation at the envelope so that the heating time can be shortened and the heating temperature can be lowered when the glass parts are fused and sealed. Moreover, for the reason that the heat radiation can easily be absorbed, it is possible to heat the predetermined portions of the glass parts in a spot-like fashion by using heating means such as an infrared lamp or a laser.

In the foregoing description, all of the tubular neck 11, the funnel 12, the stem 13, and the air-evacuating tube 14 as the glass parts are made of the infrared absorbing glass as a best mode. However, a sufficient effect can be obtained as far as at least one of the glass parts is made of the infrared absorbing glass.

First of all, description will be made about the case where the neck is made of the infrared absorbing glass.

In case where the neck is made of the infrared absorbing glass, the infrared transmittance for the wavelength of 1050nm is preferably equal to 60% or less at the thickness of 2.4 mm, more preferably 50% or less, further preferably 30% or less.

Generally, in order to insert the electron gun 16 into the neck 11, such operation must be carried out while checking that the electron gun 16 is located at an accurate position. Accordingly, it is desired to have a visible light transmittance not lower than a predetermined level. Therefore, the neck 11 is formed so that the light transmittance at the wavelength of 570nm corresponding to visible light is equal to 10% or more, preferably 20% or more, in terms of the thickness of 2.4 mm.

It is noted here that the neck 11 generally used has an average thickness of 2.4 mm. However, the neck in the present invention is not limited thereto but may have a greater average thickness of 3 mm or a smaller average thickness of 2 mm. In order to shorten the fusing time for the neck or to lower the fusing temperature, the viscosity of the glass is lowered. However, it is very difficult to change the viscosity alone with other requisite characteristics maintained. Furthermore, if the viscosity of the neck glass is lowered, a large stress is produced when the neck is fused to the existing funnel or the existing stem. This often results in occurrence of breakage or damage.

In order to reduce the infrared transmittance of the glass used as the neck, the glass preferably contains 0.03-10 weight% (preferably 0.05-8 weight%, more preferably 0.1-7 weight%, further preferably 1-7 weight%) of Fe₂O₃. Moreover, it is more effective to reduce Fe₂O₃ so as to increase the ratio of Fe²⁺. Therefore, it is preferable that the content of Fe²⁺ is 0.003 weight% or more or that the ratio of Fe²⁺/Fe³⁺ is 0.08 or more.

In order to increase Fe²⁺ in the glass, a reducing agent such as a metal Si is preferably contained. An appropriate content of the reducing agent is 0.002-0.5 w%. In case where the reducing agent is contained, the light transmittance of the neck in the infrared region can be reduced while maintaining the light transmittance in the visible region.

However, in order to increase the ratio of Fe²⁺/Fe³⁺ to 0.5 or more, the reduction must be considerably strong. As a result, PbO contained in the glass will be metallized to form a stone or the glass composition tends to vary. Therefore, such increase in ratio is not preferable.

The neck in the present invention is preferably made of the infrared absorbing glass containing 20-40 weight% of PbO. Specifically, if the content of PbO is less than 20 weight%; an X-ray absorption coefficient sufficient as the neck glass can not be obtained. In this case, the absorption coefficient for the X ray having the wavelength of 0.6 angstrom is not greater than 80cm⁻¹ so that the amount of transmission of the X ray is excessive. This may result in adverse influence upon the human body. On the other hand, when the content of PbO is greater than 40 weight%, the viscosity of the glass becomes excessively low. This makes it difficult to form the neck into a tubular shape.

The neck in the present invention is preferably made of the infrared absorbing glass having a composition of, in weight percent, 20-40% PbO, 38-58% SiO₂, 0-5% Al₂O₃, 0-5%MgO, 0-6% CaO, 0-9% SrO, 0-9% BaO, 0-5% Na₂O, 6-15% K₂O, 0-1% Sb₂O₃, and 0.03-10% Fe₂O₃.

Followings are the reasons why the contents of SiO₂, Al₂O₃, MgO, CaO, SrO, BaO, Na₂O, K₂O, Sb₂O₃, and Fe₂O₃ in the glass are limited as mentioned above.

SiO₂ is a component serving as a network former of the glass. However, if the content of SiO₂ is less than 38%, the viscosity of the glass is lowered to make it difficult to form the glass. On the other hand, the content more than 58% leads to an excessively low coefficient of thermal expansion which will not match the coefficient of thermal expansion of the funnel glass.

Al₂O₃ also is a component serving as a network former of the glass. However, if the content is greater than 5%, the glass is easily devitrified so that the formation of the glass becomes difficult and the coefficient of thermal expansion becomes excessively low.

Both MgO and CaO are components serving to facilitate melting of the glass and to adjust the coefficient of thermal expansion and the viscosity. However, if the content of MgO is greater than 5% or if the content of CaO is greater than 6%, the glass is easily devitrified so that the formation or shaping becomes difficult.

Both SrO and BaO are components serving to facilitate the melting of the glass, to adjust the coefficient of thermal expansion and the viscosity, and to improve the X-ray absorbability. However, if the content of each component is more than 9%, the glass tends to be devitrified so that the formation or shaping becomes difficult.

Na₂O is a component to adjust the coefficient of thermal expansion and the viscosity. If the content is more than 5%, the viscosity is excessively low so that the formation or shaping is difficult.

K₂O, just like Na₂O, is a component to adjust the coefficient of thermal expansion and the viscosity. If the content is smaller than 6%, the coefficient of thermal expansion is excessively low. If the content is greater than 15%, the viscosity becomes excessively low.

Sb₂O₃ can be used as a fining agent. However, if the content is 1% or more, the glass is readily devitrified so that the formation or shaping is difficult.

Fe₂O₃ is a component lowering the infrared transmittance of the glass. However, if the content is smaller than 0.03%, the effect of lowering the infrared transmittance becomes small. On the other hand, if the content of Fe₂O₃ is greater than 10%, the glass is easily devitrified so that the formation or shaping is difficult. In addition, the neck is colored yellowish brown so that the optical transmittance in the visible region will drastically be decreased. Moreover, in this event, a crystal called Leucite is deposited at an interface between a molten glass and a refractory. Deposition of the crystal results in the decrease in mechanical strength of the glass.

Next, description will be made about the case where the stem or the air-evacuating pipe is made of the infrared absorbing glass.

It is desirable that, in the glass formed into the stem or the air-evacuating pipe, the infrared transmittance for the wavelength of 1050nm is equal to 60% or less, more preferably 50% or less at the glass thickness of 2.4 mm.

In order to shorten the fusing time for the neck or to lower the fusing temperature, or to shorten the fusing time for the air-evacuating pipe or to lower the fusing temperature, the viscosity of the glass is lowered. However, it is very difficult to change the viscosity alone with other requisite characteristics maintained. When the stem glass changed in viscosity alone is fused with the existing neck, a large stress is produced by the difference in viscosity curve during the solidification of the glass. Therefore, this fusing often results in occurrence of breakage or damage.

In order to reduce the infrared transmittance of the glass used as the stem or the air-evacuating pipe, the glass preferably contains 0.05-10 weight% (preferably 0.1-8 weight%, more preferably 0.2-5 weight%) of Fe₂O₃. Moreover, it is more effective to reduce Fe³⁺ so as to increase the ratio of Fe²⁺. Therefore, it is preferable that the content of Fe²⁺ is 0.005 weight% or more or that the ratio of Fe²⁺/Fe³⁺ is 0.08 or more.

In order to increase Fe²⁺ in the glass, a reducing agent such as a metal Si is preferably contained. An appropriate content of the reducing agent is 0.002-0.5 weight%. It is preferable to contain the reducing agent because the light transmittance of the stem and the air-evacuating pipe in the infrared region can be reduced while the light transmittance in the visible region is kept at 30% or more to maintain the transparency.

However, if the ratio of Fe²⁺/Fe³⁺ is increased to 0.5 or more, the reduction must be considerably strong. As a result, PbO contained in the glass will be metallized to form a stone or the glass composition tends to vary. Therefore, such increase in ratio is not preferable.

Each of the stem and the air-evacuating pipe in the present invention is preferably made of the infrared absorbing glass having a composition of, in weight percent, 48-68% SiO₂, 0-5% Al₂O₃, 18-40% PbO, 5-15% Na₂O, 0-6% K₂O, 0-1% Sb₂O₃, and 0.05-10% Fe₂O₃. A more preferable composition is, in weight percent, 50-66% SiO₂, 0.1-4% Al₂O₃, 20-38% PbO, 6-14% Na₂O, 1-5% K₂O, 0-0.6% Sb₂O₃, and 0.02-5% Fe₂O₃.

Followings are the reasons why the contents of SiO₂, Al₂O₃, PbO, Na₂O, K₂O, Sb₂O₃, and Fe₂O₃ in the glass are limited as mentioned above.

SiO₂ is a component serving as a network former of the glass. However, if the content of SiO₂ is less than 48%, the viscosity of the glass is lowered to make it difficult to form the glass into a desired shape. On the other hand, the content more than 68% leads to an excessively low coefficient of thermal expansion which will not match the coefficient of thermal expansion of the existing glass. This may result in defective fusing.

Al₂O₃ also is a component serving as a network former of the glass. However, if the content is greater than 5%, the glass is easily devitrified so that the formation of the glass becomes difficult and the coefficient of thermal expansion becomes excessively low.

PbO is a component to improve the X-ray absorbability, electric insulation, and hot workability of the glass. If the content is less than 18%, it is difficult to obtain sufficient X-ray absorbability. On the other hand, if the content is more than 40%, it is difficult to obtain sufficient electric insulation and sufficient hot workability.

Na₂O is a component to adjust the coefficient of thermal expansion and the viscosity. If the content is less than 5%, the coefficient of thermal expansion is excessively low and will not match the coefficient of thermal expansion of the existing glass. If the content is more than 15%, the viscosity becomes excessively low to make the formation or shaping difficult.

K₂O, just like Na₂O, is a component to adjust the coefficient of thermal expansion and the viscosity. If the content is greater than 6%, the viscosity is excessively low to make the formation or shaping difficult. Moreover, the electric resistance of the glass becomes low. This results in easy occurrence of a problem such as the dielectric breakdown.

Sb₂O₃ can be used as a fining agent. However, if the content is 1% or more, the glass is readily devitrified so that the formation or shaping is difficult.

Fe₂O₃ is a component lowering the infrared transmittance of the glass. However, if the content is smaller than 0.05%, the effect of lowering the infrared transmittance becomes small. On the other hand, if the content is greater than 10%, the glass is easily devitrified so that the formation or shaping is difficult.

Next, description will be made about the case where the funnel is made of the infrared absorbing glass.

In case where the funnel is formed by the infrared absorbing glass, it is preferable that the infrared transmittance for the wavelength of 1050nm is equal to 60% or less at the glass thickness of 10 mm, more preferably 50% or less, further preferably 30% or less.

It is noted here that the infrared transmittance of the funnel is defined with reference to the thickness of 10 mm. In general, the thickness of the funnel on the market varies depending on the size from a large-sized one having the average thickness of 20 mm to a small-sized one having the average thickness of 1 mm. However, the funnel according to the present invention can be applied to the funnels of any size.

In order to shorten the fusing time for the funnel or to lower the fusing temperature, the viscosity of the glass is lowered. However, it is very difficult to change the viscosity alone with other requisite characteristics maintained. When the funnel glass changed in viscosity alone has is fused with the existing neck, a large stress is produced by the difference in viscosity curve during the solidification of the glass. Therefore, this fusing often results in occurrence of breakage or damage.

In order to reduce the infrared transmittance of the glass used as the funnel, the glass preferably contains 0.2-10 weight% (preferably 0.5-8 weight%, more preferably 1-5 weight%) of Fe₂O₃. Moreover, it is more effective to reduce Fe³⁺ so as to increase the ratio of Fe²⁺. Therefore, it is preferable that the content of Fe²⁺ is 0.015 weight% or more or that the ratio of Fe²⁺/Fe³⁺ in weight ratio is 0.08 or more.

In order to increase Fe²⁺ in the glass, a reducing agent such as a metal Si is preferably contained. An appropriate content of the reducing agent is 0.002-0.5 weight%. In case where the reducing agent is contained, the light transmittance of the funnel in the infrared region can be reduced while the light transmittance in the visible region is kept at 30% or more to maintain the transparency.

However, in order to increase the ratio of Fe²⁺/Fe³⁺ to 0.5 or more, the reduction must be considerably strong. As a result, PbO contained in the glass will be metallized to form a stone or the glass composition tends to vary. Therefore, such increase in ratio is not preferable.

The funnel in the present invention is preferably made of the infrared absorbing glass containing 10-30 weight% of PbO. Specifically, if the content of PbO is less than 10 weight%, an X-ray absorption coefficient sufficient as the funnel glass can not be obtained. Specifically, the absorption coefficient for the X ray having the wavelength of 0.6 angstrom is not greater than 40cm⁻¹. Therefore, the amount of transmission of the X ray is excessive. This may result in adverse influence upon the human body. On the other hand, when the content of PbO is greater than 30 weight%, the viscosity of the glass becomes excessively low. This makes it difficult to form the glass into the funnel.

The funnel in the present invention is preferably made of the infrared absorbing glass having a composition of, in weight percent, 48-58% SiO₂, 0.5-6% Al₂O₃, 10-30% PbO, 0-5% MgO, 0-6% CaO, 0-9% SrO, 0-9% BaO, 3-9% Na₂O, 4-11% K₂O, 0-1% Sb₂O₃, and 0.2-10% Fe₂O₃. A more preferable composition is, in weight percent, 49-57% SiO₂, 1-5% Al₂O₃, 15-27% PbO, 0-4% MgO, 1-5% CaO, 0-4% SrO, 0-4% BaO, 4-8% Na₂O, 5-10% K₂O, 0-0.6% Sb₂O₃, and 1-5% Fe₂O₃.

Followings are the reasons why the contents of SiO₂, Al₂O₃, PbO, MgO, CaO, SrO, BaO, Na₂O, K₂O, Sb₂O₃, and Fe₂O₃ in.the glass are limited as mentioned above.

SiO₂ is a component serving as a network former of the glass. However, if the content is less than 48%, the viscosity of the glass is lowered to make the formation or shaping difficult. On the other hand, the content more than 58% leads to an excessively low coefficient of thermal expansion which will not match the coefficient of thermal expansion of the neck glass.

Al₂O₃ also is a component serving as a network former of the glass. However, if the content is smaller than 0.5%, the viscosity of the glass becomes low to make the formation or shaping difficult. If the content is greater than 6%, the glass is easily devitrified so that the formation or shaping becomes difficult and the coefficient of thermal expansion becomes excessively low.

Both MgO and CaO are components serving to facilitate melting of the glass and to adjust the coefficient of thermal expansion and the viscosity. However, if the content of MgO is greater than 5% or if the content of CaO is greater than 6%, the glass is easily devitrified so that the formation or shaping becomes difficult.

Both SrO and BaO are components serving to facilitate the melting of the glass, to adjust the coefficient of thermal expansion and the viscosity, and to improve the X-ray absorption coefficient. However, if the content of each component is more than 9%, the glass tends to be devitrified so that the formation or shaping becomes difficult.

Na₂O is a component to adjust the coefficient of thermal expansion and the viscosity. If the content is less than 3%, the coefficient of the thermal expansion of the glass becomes excessively low and will not match the coefficient of the thermal expansion of the neck glass. On the other hand, if the content is greater than 9%, the viscosity is excessively low so that the formation or shaping is difficult.

K₂O, just like Na₂O, is a component to adjust the coefficient of thermal expansion and the viscosity. If the content is smaller than 4%, the coefficient of thermal expansion of the glass is excessively low and will not match the coefficient of the thermal expansion of the neck glass. If the content is greater than 11%, the viscosity becomes excessively low.

Sb₂O₃ can be used as a fining agent. However, if the content is 1% or more, the glass is readily devitrified so that the formation is difficult.

Fe₂O₃ is a component lowering the infrared transmittance of the glass. However, if the content is smaller than 0.2%, the effect of lowering the infrared transmittance becomes small. On the other hand, if the content is greater than 10%, the glass is easily devitrified so that the formation or shaping is difficult.

Hereinbelow, the present invention will be described in detail in conjunction with examples.

Table 1 shows Examples (Samples Nos. 1-5) of the glass for use as the neck and Table 2 shows Comparative Examples (Samples Nos. 6-8) of the glass for use as the neck.

**[Table 1]**

| | Examples | | | | |
|---|---|---|---|---|---|
| Sample No. | 1 | 2 | 3 | 4 | 5 |
| PbO | 33.9 | 35.0 | 28.0 | 31.0 | 28.0 |
| SiO₂ | 49.5 | 47.5 | 50.5 | 45.3 | 48.5 |
| Al₂O₃ | 1.3 | 2.0 | 0.5 | 3.4 | 1.4 |
| MgO | - | 0.5 | - | 1.0 | - |
| CaO | 1.5 | 2.5 | - | 1.3 | 0.1 |
| SrO | 1.1 | - | 5.5 | 2.0 | 2.4 |
| BaO | - | - | 0.5 | 2.0 | 1.8 |
| Na₂O | 2.2 | 1.0 | 0.5 | 3.0 | 0.8 |
| K₂O | 10.4 | 11.0 | 12.5 | 9.0 | 12.0 |
| Sb₂O₃ | - | - | - | - | - |
| Fe₂O₃ | 0.30 | 0.50 | 2.00 | 2.00 | 5.00 |
| Metal Si | 100ppm | 50ppm | 20ppm | 100ppm | 50ppm |
| Fe²⁺ | 0.0300 | 0.0440 | 0.1560 | 0.2000 | 0.4380 |
| Fe²⁺/Fe³⁺ | 0.17 | 0.14 | 0.13 | 0.17 | 0.14 |
| Infrared Transmittance (%) | 68.0 | 56.2 | 14.3 | 10.6 | 0.2 |
| Softening & Deformation Time (sec) | 170 | 165 | 160 | 155 | 150 |
| X-ray Absorption Coefficient (cm⁻¹) | 102 | 104 | 95 | 98 | 92 |

**[Table 2]**

| | Comparative Examples | | |
|---|---|---|---|
| Sample No. | 6 | 7 | 8 |
| PbO | 33.88 | 33.88 | 33.95 |
| SiO₂ | 49.2 | 49.6 | 49.1 |
| Al₂O₃ | 1.3 | 1.3 | 1.3 |
| MgO | - | - | - |
| CaO | 1.5 | 1.5 | 1.5 |
| SrO | 1.1 | 1.1 | 1.1 |
| BaO | - | - | - |
| Na₂O | 2.2 | 2.2 | 2.2 |
| K₂O | 10.4 | 10.4 | 10.4 |
| Sb₂O₃ | 0.4 | - | 0.4 |
| Fe₂O₃ | 0.02 | 0.02 | 0.05 |
| Metal Si | - | 50ppm | - |
| Fe²⁺ | 0.0008 | 0.0014 | 0.0020 |
| Fe²⁺/Fe³⁺ | 0.06 | 0.11 | 0.06 |
| Infrared Transmittance (%) | 90.1 | 89.9 | 88.4 |
| Softening & Deformation Time (sec) | 178 | 176 | 173 |
| X-ray Absorption Coefficient (cm⁻¹) | 102 | 102 | 102 |

Each of the samples given in Tables 1 and 2 was prepared in the following manner.

A batch prepared to have a glass composition (weight%) as defined in the Tables was put into a platinum crucible and melted at about 1480°C for 4 hours. In order to obtain a uniform or homogeneous glass, degassing was performed by stirring using a platinum stirring bar for three minutes. Thereafter, the molten glass was poured into a mold, formed into a predetermined shape, and thereafter gradually cooled or annealed.

For each sample obtained as mentioned above, the amount of Fe²⁺, the ratio of Fe²⁺/Fe³⁺, the infrared transmittance, the softening and deformation time, and the X-ray absorption coefficient were examined and shown in the Tables.

As is clear from the Tables, in each of the samples Nos. 1-5 as Examples, the content of Fe₂O₃ was 0.30 weight% or more, the amount of Fe²⁺ was 0.0300 weight% or more, the ratio of Fe²⁺/Fe³⁺ was 0.13 or more, and the infrared transmittance was 0.2-68.0%. Therefore, the softening and deformation time was within 170 seconds. The X-ray absorption coefficient of each of these samples was more than 92cm⁻¹. For the sample No. 5, the visible light transmittance (thickness of 2.4mm) at the wavelength of 570nm was measured and was equal to 21%.

On the other hand, in the sample No. 6 as Comparative Example, the content of Fe₂O₃ was as small as 0.02 weight%, the amount of Fe²⁺ was as small as 0.0008 weight%, the ratio of Fe²⁺/Fe³⁺ was as small as 0.06, and the infrared transmittance was as high as 90.1%. Therefore, the softening and deformation time was as long as 178 seconds.

In the sample No. 7, the content of Fe₂O₃ was as small as 0.02 weight%, the amount of Fe²⁺ was as small as 0.0014 weight%, and the infrared transmittance was as high as 89.9%. Therefore, the softening and deformation time was as long as 176 seconds.

In the sample No. 8, the amount of Fe²⁺ was as small as 0.0020weight%, the ratio of Fe²⁺/Fe³⁺ was as small as 0.06, and the infrared transmittance was as high as 88.4%. Therefore, the softening and deformation time was as long as 173 seconds.

As is clear from the above-mentioned results, the neck prepared from each of the samples as Examples makes it possible to lower the fusing temperature of fusing with the stem and to shorten the fusing time as compared with the neck prepared from each of the samples as Comparative Examples.

Next, the glass having the composition of the sample No. 4 as Example was formed into a tubular shape by the use of the well known Danner process and then cut to form the neck. Thereafter, the electron gun with the impregnated cathode was equipped in the neck and the stem was fused by heating using a combustion burner without air cooling. As a result, the fusing was well performed without degradation in emission characteristics of the electron gun.

Table 3 shows Examples (Samples Nos. 9-13) of the glass for use as the stem and the air-evacuating pipe and Table 4 shows Comparative Examples (Samples Nos. 14-16).

**[Table 3]**

| | Examples | | | | |
|---|---|---|---|---|---|
| Sample No. | 9 | 10 | 11 | 12 | 13 |
| SiO₂ | 61.7 | 51.4 | 54.0 | 54.0 | 59.2 |
| Al₂O₃ | 1.0 | 2.0 | 0.5 | 1.0 | 0.9 |
| PgO | 23.0 | 30.0 | 28.0 | 31.0 | 28.0 |
| Na₂O | 9.0 | 8.0 | 10.0 | 7.0 | 8.2 |
| K₂O | 3.0 | 3.0 | 4.0 | 5.0 | 3.6 |
| Sb₂O₃ | 0.3 | 0.6 | 0.5 | 0.5 | - |
| Fe₂O₃ | 2.0 | 5.0 | 3.0 | 1.5 | 0.1 |
| Metal Si | 50ppm | 30ppm | 80ppm | 50ppm | 10ppm |
| Fe²⁺ | 0.172 | 0.405 | 0.290 | 0.135 | 0.008 |
| Fe²⁺/Fe³⁺ | 0.14 | 0.13 | 0.16 | 0.15 | 0.11 |
| Infrared Transmittance (%) | 30 | 2 | 15 | 40 | 69 |
| Softening & Deformation Time (sec) | 155 | 145 | 150 | 160 | 165 |

**[Table 4]**

| | Comparative Examples | | |
|---|---|---|---|
| Sample No. | 14 | 15 | 16 |
| SiO₂ | 63.68 | 63.68 | 63.66 |
| Al₂O₃ | 1.0 | 1.0 | 1.0 |
| PgO | 23.0 | 23.0 | 23.0 |
| Na₂O | 9.0 | 9.0 | 9.0 |
| K₂O | 3.0 | 3.0 | 3.0 |
| Sb₂O₃ | 0.3 | 0.3 | 0.3 |
| Fe₂O₃ | 0.02 | 0.02 | 0.04 |
| Metal Si | - | 30ppm | - |
| Fe²⁺ | 0.0007 | 0.0017 | 0.0014 |
| Fe²⁺/Fe³⁺ | 0.05 | 0.12 | 0.05 |
| Infrared Transmittance (%) | 90 | 87 | 88 |
| Softening & Deformation Time (sec) | 185 | 182 | 183 |

Each of the samples given in Tables 3 and 4 was prepared in the following manner.

A batch prepared to have a glass composition (weight%) as defined in the Tables was put into a platinum crucible and melted at about 1480°C for 4 hours. In order to obtain a uniform or homogeneous glass, degassing was performed by stirring using a platinum stirring bar for three minutes. Thereafter, the molten glass was poured into a mold, formed into a predetermined shape, and thereafter gradually cooled or annealed.

For each sample obtained as mentioned above, the amount of Fe²+, the ratio of Fe²⁺/Fe³⁺, the infrared transmittance, and the softening and deformation time were examined and shown in the Tables.

As is clear from the Tables, in each of the samples Nos. 9-13 as Examples, the content of Fe₂O₃ was 0.1 weight% or more, the amount of Fe²⁺ was 0.008 weight% or more, the ratio of Fe²⁺/Fe³⁺ was 0.11 or more, and the infrared transmittance was 2-69%. Therefore, the softening and deformation time was within 165 seconds.

On the other hand, in the sample No. 14 as Comparative Example, the content of Fe₂O₃ was as small as 0.02 weight%, the amount of Fe²⁺ was as small as 0.0007 weight%, the ratio of Fe²⁺/Fe³⁺ was as small as 0.05, and the infrared transmittance was as high as 90%. Therefore, the softening and deformation time was as long as 185 seconds.

In the sample No. 15, the content of Fe₂O₃ was as small as 0.02 weight%, the amount of Fe²⁺ was as small as 0.001 weight%, and the infrared transmittance was as high as 87%. Therefore, the softening and deformation time was as long as 182 seconds.

In the sample No. 16, the amount of Fe²⁺ was as small as 0.0014 weight%, the ratio of Fe²⁺/Fe³⁺ was as small as 0.05, the infrared transmittance was as high as 88%. Therefore, the softening and deformation time was as long as 183 seconds.

As is clear from the above-mentioned results, the glass prepared from each of the samples as Examples makes it possible to lower the fusing temperature and the sealing temperature and to shorten the fusing time and the sealing time as compared with the glass prepared from each of the samples as Comparative Examples.

Next, the glass having the composition of the sample No. 10 as Example was formed into a tubular shape by the use of the well known Danner process and then subjected to hot working to form the stem and the air-evacuating pipe. Moreover, the neck was prepared from the glass having the composition of the sample No. 5 in Table 1. By the use of the stem, the air-evacuating pipe, and the neck, a cathode ray tube was produced. As the panel, PT-28 manufactured by Nippon Electric Glass Co., Ltd, was used. As the funnel, FT-22H manufactured by Nippon Electric Glass Co., Ltd. was used.

In the above-mentioned cathode ray tube, the electron gun with the impregnated cathode was used as the electron gun. After the electron gun was equipped in the neck, the neck and the stem were fused by the heating using a combustion burner without air cooling. The fusing was well performed without degradation of the emission characteristic of the electron gun. Moreover, after the cathode ray tube was reduced in pressure and evacuated, the air-evacuating pipe was sealed by heating using the combustion burner. The sealing was well performed without degradation of the emission characteristic of the electron gun.

Instead of the above-mentioned heating by the burner, each of the glass parts was fused by heating using the infrared lamp. Specifically, the panel and the funnel were coupled by frit seal while coupling of the funnel and the neck, coupling of the neck and the stem, and coupling of the stem and the air-evacuating pipe were carried out by irradiating the infrared ray to the predetermined portions which were thereby heated and softened to be fused. The fusing of the anode button to the funnel and the sealing of the air-evacuating pipe were also carried out by heating using the infrared ray.

Hereinbelow, description will be made in detail about a method of fusing the neck and the stem by the use of the infrared ray with reference to Fig. 2.

First of all, an infrared lamp 25 and a mirror 26 were positioned near the neck 11. The stem 13 with the air-evacuating pipe 14 preliminarily fused thereto was brought into contact with the open end of the neck 11 with the electron gun 16 equipped therein. In this state, the infrared ray was irradiated from the infrared lamp 25. As a result, the infrared ray was converged and irradiated to the contacting portion of the neck 11 and the stem 13. Thus, the heating in a spot-like fashion was performed. Thereafter, the neck 11 was rotated around an axial direction so that the infrared ray was irradiated throughout its entire circumference. As a result, the glass was heated and softened and the neck 11 and the stem 13 were completely fused. At this time, the temperature of a cathode of the electron gun 16 was measured. As a result, the temperature did not reach 600°C.

Table 5 shows Examples (Samples Nos. 17-21) of the glass for use as the funnel and Table 6 shows Comparative Examples (Samples Nos. 22-24).

**[Table 5]**

| | Examples | | | | |
|---|---|---|---|---|---|
| Sample No. | 17 | 18 | 19 | 20 | 21 |
| SiO₂ | 50.7 | 49.3 | 49.5 | 53.3 | 52.5 |
| Al₂O₃ | 3.3 | 2.0 | 4.9 | 1.0 | 3.3 |
| PbO | 22.8 | 23.3 | 19.0 | 25.0 | 22.8 |
| MgO | 1.9 | 2.5 | 2.0 | 0.5 | 1.9 |
| CaO | 3.8 | 3.5 | 3.9 | 4.2 | 3.8 |
| SrO | 0.6 | - | 2.0 | 1.0 | 0.6 |
| BaO | 0.7 | 0.1 | 1.5 | - | 0.7 |
| Na₂O | 6.3 | 6.2 | 6.2 | 5.0 | 6.3 |
| K₂O | 7.6 | 7.9 | 7.8 | 8.5 | 7.6 |
| Sb₂O₃ | 0.3 | 0.2 | 0.2 | - | 0.3 |
| Fe₂O₃ | 2.0 | 5.0 | 3.0 | 1.5 | 0.2 |
| Metal Si | 50ppm | 30ppm | 80ppm | 50ppm | 10ppm |
| Fe²⁺ | 0.172 | 0.405 | 0.290 | 0.135 | 0.016 |
| Fe²⁺/Fe³⁺ | 0.14 | 0.13 | 0.16 | 0.15 | 0.11 |
| Infrared Transmittance (%) | 25 | 1 | 13 | 30 | 65 |
| Softening & Deformation Time (sec) | 163 | 153 | 159 | 166 | 175 |
| X-ray Absorption Coefficient (cm⁻¹) | 67 | 68 | 61 | 73 | 66 |

**[Table 6]**

| | Comparative Examples | | |
|---|---|---|---|
| Sample No. | 22 | 23 | 24 |
| SiO₂ | 52.6 | 52.6 | 52.55 |
| Al₂O₃ | 3.3 | 3.3 | 3.3 |
| PbO | 22.3 | 22.8 | 22.8 |
| MgO | 1.9 | 1.9 | 1.9 |
| CaO | 3.8 | 3.8 | 3.8 |
| SrO | 0.6 | 0.6 | 0.6 |
| BaO | 0.7 | 0.7 | 0.7 |
| Na₂O | 6.3 | 6.3 | 6.3 |
| K₂O | 7.6 | 7.6 | 7.6 |
| Sb₂O₃ | 0.3 | 0.3 | 0.3 |
| Fe₂O₃ | 0.1 | 0.1 | 0.15 |
| Metal Si | - | 30ppm | |
| Fe²⁺ | 0.004 | 0.008 | 0.006 |
| Fe²⁺/Fe³⁺ | 0.06 | 0.13 | 0.06 |
| Infrared Transmittance (%) | 78 | 73 | 71 |
| Softening & Deformation Time (sec) | 190 | 186 | 184 |
| X-ray Absorption Coefficient (cm⁻¹) | 67 | 67 | 67 |

Each of the samples in Tables 5 and 6 was prepared in the following manner.

A batch prepared to have a glass composition (weight%) as defined in the Tables was put into a platinum crucible and melted at about 1500°C for 4 hours. In order to obtain a uniform or homogeneous glass, degassing was performed by stirring using a platinum stirring bar for three minutes. Thereafter, the molten glass was poured into a mold and was thereafter gradually cooled or annealed.

For each sample obtained as mentioned above, the amount of Fe²+, the ratio of Fe²⁺/Fe³⁺, the infrared transmittance, the softening and deformation time, and the X-ray absorption coefficient were examined and shown in the Tables.

As is clear from the Tables, in each of the samples Nos. 17-21 as Examples, the content of Fe₂O₃ was 0.2 weight% or more, the amount of Fe²⁺ was 0.016 weight% or more, the ratio of Fe²⁺/Fe³⁺ was 0.11 or more, and the infrared transmittance was 1-65%. Therefore, the softening and deformation time was within 175 seconds. The X-ray absorption coefficient of each of these samples was more than 61cm⁻¹.

On the other hand, in the sample No. 22 as Comparative Example, the content of Fe₂O₃ was as small as 0.01 weight%, the amount of Fe²⁺ was as small as 0.004 weight%, the ratio of Fe²⁺/Fe³⁺ was as small as 0.06, and the infrared transmittance was as high as 78%. Therefore, the softening and deformation time was as long as 190 seconds.

In the sample No. 23, the content of Fe₂O₃ was as small as 0.1 weight%, the amount of Fe²⁺ was as small as 0.008 weight%, and the infrared transmittance was as high as 73%. Therefore, the softening and deformation time was as long as 186 seconds.

In the sample No. 24, the amount of Fe²⁺ was as small as 0.006 weight%, the ratio of Fe²⁺/Fe³⁺ was as small as 0.06, and the infrared transmittance was as high as 71%. Therefore, the softening and deformation time was as long as 184 seconds.

As is clear from the above-mentioned results, the funnel prepared from each of the samples as Examples makes it possible to lower the fusing temperature of fusing with the neck and to shorten the fusing time as compared with the funnel prepared from each of the samples as Comparative Examples.

Next, the glass having the composition of the sample No. 17 as Example was formed into a funnel shape by the use of the well known press-forming technique and then fused with the existing neck glass using the infrared lamp. As a result, these glass parts were well fused into an integral structure without adhesion of volatile substances from the glass.

Herein, the amount of Fe²⁺ and the ratio of Fe²⁺/Fe³⁺ in each Table were obtained by chemical analysis values using sulfur decomposition and chrolic acid dissolution. The infrared transmittance was measured as follows. Each sample was formed into a plate-like shape and then subjected to optical polishing into a predetermined thickness (2.4 mm for the glass for the neck, 1.5 mm for the glass for the stem and the air-evacuating pipe, and 10mm for the glass for the funnel). Thereafter, the light transmittance at the wavelength of 1050nm was measured by the use of the visible/infrared spectrophotometer.

The softening and deformation time was measured as follows. Each sample was processed into a solid bar having a size of 6φ x 100mm and then suspended in an electric furnace. The solid bar was then heated at its center portion of 2cm in the longitudinal direction at a predetermined temperature. Measurement was made of the time required for the solid bar to be softened, deformed and extended to the whole length of 1000mm. The predetermined temperature mentioned above is 750°C for the glass for the neck, the stem, and the air-evacuating pipe and 700°C for the glass for the funnel.

The X-ray absorption coefficient was obtained by calculating the absorption coefficient for the wavelength of 0.6 angstrom with reference to the glass composition and the density.

### Industrial Applicability

As described above, in the cathode ray tube according to the present invention, at least one of the funnel, the neck, the stem, and the air-evacuating pipe can easily absorb the heat radiation and is easily softened and deformed by heating. Therefore, it is possible to shorten the heating time upon fusing or sealing as well as to reduce the heating temperature. Moreover, the cathode ray tube is suitable for heating in a spot-like fashion by the use of the infrared lamp or the laser.

Therefore, not only in case where the typical electron gun utilizing barium as the cathode material is used but also in case where the electron gun with the impregnated cathode is equipped, the fusing or the sealing can be performed without degrading the emission characteristic of the electron gun even when the air-cooling apparatus is not used.

In the method of producing the cathode ray tube according to this invention, at least one of the funnel, the neck, the stem, and the air-evacuating pipe can easily absorb heat radiation so that the fusing and the sealing can be performed by heating in a spot-like fashion the predetermined position of the glass part by the use of the infrared ray. Therefore, this method is suitable for performing, even in case where the electron gun with the impregnated cathode is equipped, the fusing and the sealing without degrading the emission characteristic of the electron gun even when the air-cooling apparatus is not used. Moreover, the heating portion prevented from pollution caused in the conventional heating using the combustion burner. Therefore, the method according to the present invention is suitable for the fusing of the neck and the stem of a color cathode ray tube using the electron gun with the impregnated cathode which will easily be degraded in emission characteristic when exposed to a high temperature.

## Claims

1. A cathode ray tube in which a panel, a funnel, a neck, a stem, and an air-evacuating pipe for forming an envelope are made as glass parts, wherein at least one of the glass parts including the funnel, the neck, the stem, and the air-evacuating pipe is made of an infrared absorbing glass with an infrared transmittance of 70% or less in a thickness direction for the wavelength of 1050nm.

2. A cathode ray tube as claimed in claim 1, wherein the neck is made of the infrared absorbing glass the infrared transmittance for the wavelength of 1050nm being equal to 60% or less at the glass thickness of 2.4 mm.

3. A cathode ray tube as claimed in claim 1, wherein the neck is made of the infrared absorbing glass containing 0.03-10 weight% of Fe₂O₃.

4. A cathode ray tube as claimed in claim 1, wherein the neck is made of the infrared absorbing glass containing 0.003 weight% or more Fe²⁺.

5. A cathode ray tube as claimed in claim 1, wherein the neck is made of the infrared absorbing glass in which the ratio of Fe²⁺/Fe³⁺ is equal to 0.08 or more in weight ratio.

6. A cathode ray tube as claimed in claim 1, wherein the neck is made of the infrared absorbing glass containing 20-40 weight% of PbO and having the absorption coefficient of 80cm⁻¹ or more for the X ray having the wavelength of 0.6 angstrom.

7. A cathode ray tube as claimed in claim 1, wherein the neck is made of the infrared absorbing glass having a composition of, in weight percent, 20-40% PbO, 38-58% SiO₂, 0-5% Al₂O₃, 0-5%MgO, 0-6% CaO, 0-9% SrO, 0-9% BaO, 0-5% Na₂O, 6-15% K₂O, 0-1% Sb₂O₃, and 0.03-10% Fe₂O₃.

8. A cathode ray tube as claimed in claim 1, wherein at least one of the stem and the air-evacuating pipe is made of the infrared absorbing glass, the infrared transmittance for the wavelength of 1050nm being equal to 60% or less at the glass thickness of 1.5 mm.

9. A cathode ray tube as claimed in claim 1, wherein at least one of the stem and the air-evacuating pipe is made of the infrared absorbing glass containing 0.05-10 weight% of Fe₂O₃.

10. A cathode ray tube as claimed in claim 1, wherein at least one of the stem and the air-evacuating pipe is made of the infrared absorbing glass containing 0.005 weight% or more Fe²⁺.

11. A cathode ray tube as claimed in claim 1, wherein at least one of the stem and the air-evacuating pipe is made of the infrared absorbing glass in which the ratio of Fe²⁺/Fe³⁺ is equal to 0.08 or more in weight ratio.

12. A cathode ray tube as claimed in claim 1, wherein at least one of the stem and the air-evacuating pipe is made of the infrared absorbing glass having a composition of, in weight percent, 48-68% SiO₂, 0-5% Al₂O₃, 18-40% PbO, 5-15% Na₂O, 0-6% K₂O, 0-1% Sb₂O₃, and 0.05-10% Fe₂O₃.

13. A cathode ray tube as claimed in claim 1, wherein the funnel is made of the infrared absorbing glass, the infrared transmittance for the wavelength of 1050nm being equal to 60% or less at the glass thickness of 10 mm.

14. A cathode ray tube as claimed in claim 1, wherein the funnel is made of the infrared absorbing glass containing 0.2-10 weight% of Fe₂O₃.

15. A cathode ray tube as claimed in claim 1 wherein the funnel is made of the infrared absorbing glass containing 0.015 weight% or more Fe²⁺.

16. A cathode ray tube as claimed in claim 1, wherein the funnel is made of the infrared absorbing glass in which the ratio of Fe²⁺/Fe³⁺ is equal to 0.08 or more in weight ratio.

17. A cathode ray tube as claimed in claim 1, wherein the funnel is made of the infrared absorbing glass containing 10-30 weight% of PbO and having the absorption coefficient of 40cm⁻¹ or more for the X ray having the wavelength of 0.6 angstrom.

18. A cathode ray tube as claimed in claim 1, wherein the funnel is made of the infrared absorbing glass having a composition of, in weight percent, 48-58% SiO₂, 0.5-6% Al₂O₃, 10-30% PbO, 0-5% MgO, 0-6% CaO, 0-9% SrO, 0-9% BaO, 3-9% Na₂O, 4-11% K₂O, 0-1% Sb₂O₃, and 0.2-10% Fe₂O₃.

19. A method of producing a cathode ray tube in which fusing and sealing of glass parts including a panel, a funnel, a neck, a stem, and an air-evacuating pipe are carried out by heating and softening them, wherein at least one of the glass parts including the funnel, the neck, the stem, and the air-evacuating pipe is made of an infrared absorbing glass, the glass part being heated and softened mainly by the use of infrared rays.

20. A method of producing a cathode ray tube as claimed in claim 19, wherein an infrared lamp is used as an emission source of an infrared ray.

21. A method of producing a cathode ray tube as claimed in claim 19, wherein a lens and a mirror are used to converge and to diverge the infrared ray.
